# FASCICULE DE BREVET EUROPEEN

(11) **EP 0 919 749 B1**
(45) Date de publication et mention de la délivrance du brevet: **02.01.2004**
(21) Numéro de dépôt: 98402937.1
(22) Date de dépôt: 25.11.1998
(51) Int. Cl.: F16J 15/32

(54) **Joint d'étanchéité d'arbre à réserve de lubrifiant**
Schmiermittelenthaltende Wellendichtung
Lubricant-containing shaft seal

(30) Priorité: 28.11.1997 FR 9715019
(43) Date de publication de la demande: 02.06.1999
(73) Titulaire: HUTCHINSON, 75008 Paris (FR)
(72) Inventeur: Crapart, René, 49500 Ste. Gemmes d'Andigne (FR); Branchereau, Bernard, 49500 Segre (FR); Landron, Alain, 49500 Segre (FR)
(74) Mandataire: Burbaud, Eric

(56) Documents cités:
- DE-A- 4 123 392
- FR-A- 1 437 899
- FR-A- 2 580 767

## Description

La présente invention concerne un joint d'étanchéité d'arbre à réserve de lubrifiant, ce joint comprenant, adhérisé sur une armature propre à entourer un arbre, un corps annulaire en élastomère pourvu, sur une tête flexible, d'une lèvre d'étanchéité propre à rester en contact avec une surface périphérique dudit arbre, à une distance radiale déterminée de l'axe dudit corps, ledit joint comportant en outre une paroi annulaire souple dirigée vers l'arbre et dont le bord, situé à une distance radiale dudit axe inférieure à ladite distance radiale déterminée, est propre à pénétrer dans une gorge de l'arbre, cette paroi délimitant ainsi, à l'intérieur et à la partie inférieure dudit joint, un espace propre à être empli d'une réserve de lubrifiant.

Grâce à ces dispositions, la réserve de lubrifiant ménagée à la partie inférieure du joint peut s'arrêter à un niveau supérieur à celui de la lèvre d'étanchéité, ce qui maintient la permanence de la lubrification entre cette lèvre et la surface périphérique de l'arbre. Après un redémarrage de l'arbre consécutif à un arrêt, en particulier, on évite ainsi tout frottement sec entre l'arbre et la lèvre du joint, et l'intégrité de celle-ci est préservée.

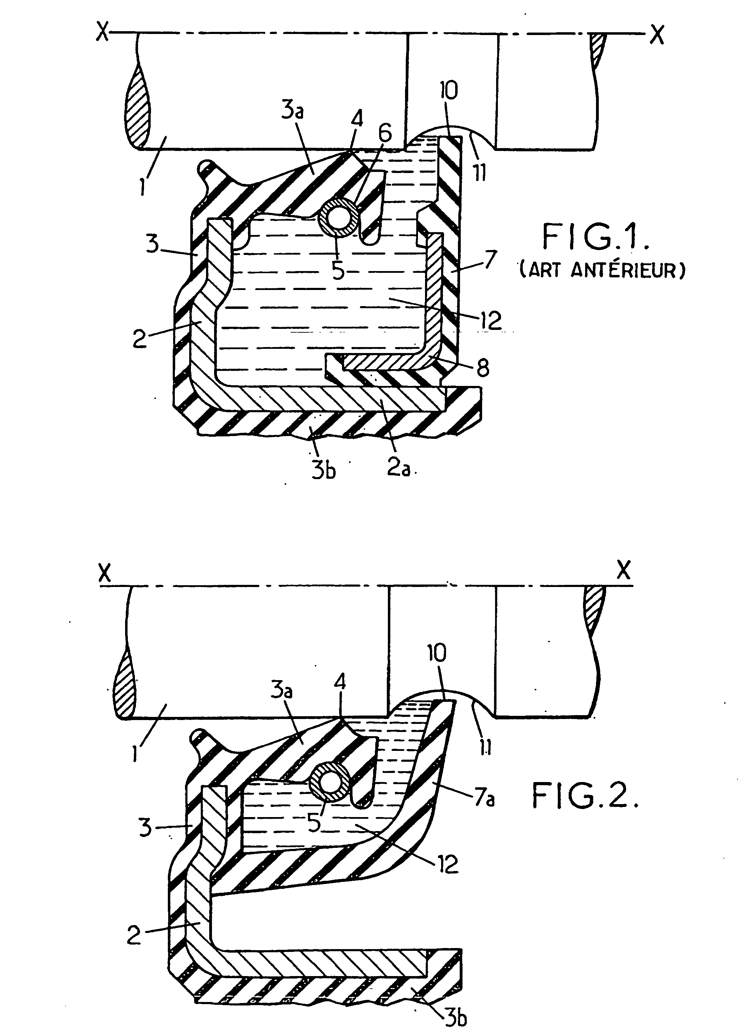

La figure 1 du dessin ci-annexé représente la partie inférieure d'un tel joint en demi-coupe axiale. Sur cette figure, l'arbre est référencé 1. Le joint, d'axe X-X confondu avec l'axe de l'arbre, comporte une armature métallique 2 à section transversale en L, sur laquelle est adhérisé le corps 3 du joint annulaire en élastomère. Lorsque le joint est engagé sur l'arbre 1, sa lèvre d'étanchéité 4 est en contact frottant avec la surface périphérique de l'arbre ; ce contact est assuré grâce à un ressort hélicoïdal et annulaire 5 logé dans une gorge périphérique 6 de la tête flexible 3a du corps d'élastomère 3, cette tête s'étendant globalement dans une direction parallèle à l'arbre 1. Ce joint comporte par ailleurs une paroi annulaire 7 globalement perpendiculaire à l'axe X-X, également en élastomère, adhérisée sur une armature métallique à section en L, référencée 8. L'ensemble est emmanché dans la paroi cylindrique 2a de l'armature 2. Le bord annulaire 10 de la paroi souple 7 s'étend à une distance radiale de l'axe X-X qui est inférieure à la distance radiale entre cet axe et la lèvre d'étanchéité 4, de sorte que ce bord 10 puisse pénétrer dans une gorge 11 de l'arbre 1. Ainsi se trouve délimité à l'intérieur de la partie inférieure du joint un espace pour une réserve 12 de lubrifiant, réserve dont le niveau, s'arrêtant au bord 10, est supérieur au niveau de la lèvre 4, ce qui assure la continuité de la lubrification au niveau du contact étanche, même après un long temps d'arrêt de l'arbre.

L'inconvénient de cette technologie, cependant, réside dans le fait que la paroi 7 et son armature 8 représentent une pièce supplémentaire séparée, avec nécessité d'une opération supplémentaire pour son emmanchement dans l'armature 2.

Le but de la présente invention est de remédier à cet inconvénient, et à cet effet un joint du type général défini au début est caractérisé en ce que ladite paroi souple fait partie intégrante dudit corps annulaire, ce qui permet d'éviter toute opération de montage supplémentaire, cette paroi partant approximativement du milieu de la branche du corps du joint qui est perpendiculaire à l'axe (X-X) et en s'incurvant ensuite radialement en direction de l'axe X-X vers la gorge de l'arbre.

Un mode d'exécution de l'invention est décrit ci-dessous à titre d'exemple nullement limitatif, avec référence à la figure 2 du dessin ci-annexé, qui est également une vue en demi-coupe axiale de la partie inférieure d'un joint conforme à l'invention.

Sur cette figure on a utilisé les mêmes références numériques que sur la figure 1 pour désigner des parties semblables ou ayant le même rôle.

Dans le mode de réalisation de la figure 2, la paroi souple, référencée 7a, part approximativement du milieu de la branche du corps 3 du joint qui est perpendiculaire à l'axe X-X et s'incurve ensuite vers la gorge 11 de l'arbre.

Bien entendu, le corps 3 du joint en élastomère est moulé d'une pièce avec sa tête 3a, son pied 3b et sa paroi souple 7a, avec adhérisation sur l'armature métallique 2, ce qui permet de diminuer le prix de revient et la main d'oeuvre.

## Revendications

1. Joint d'étanchéité d'arbre à réserve de lubrifiant, ce joint comprenant, adhérisé sur une armature (2) propre à entourer un arbre (1), un corps annulaire (3) en élastomère pourvu, sur une tête flexible (3a), d'une lèvre d'étanchéité (4) propre à rester en contact avec une surface périphérique dudit arbre (1), à une distance radiale déterminée de l'axe (X-X) dudit corps (3), ledit joint comportant en outre une paroi annulaire souple (7) dirigée vers l'arbre (1) et dont le bord (10), situé à une distance radiale dudit axe (X-X) inférieure à ladite distance radiale déterminée, est propre à pénétrer dans une gorge (11) de l'arbre (1), cette paroi (7) délimitant ainsi, à l'intérieur et à la partie inférieure dudit joint, un espace propre à être empli d'une réserve (12) de lubrifiant, **caractérisé en ce que** ladite paroi souple (7a) fait partie intégrante dudit corps annulaire (3) en partant approximativement du milieu de la branche du corps (3) du joint qui est perpendiculaire à l'axe (X-X) et en s'incurvant ensuite radialement en direction de l'axe X-X vers la gorge (11) de l'arbre.

2. Joint selon la revendication 1, **caractérisé en ce que** le corps en élastomère est moulé d'une pièce avec sa paroi souple (7a), sa tête flexible (3a) et un pied (3b), en étant adhérisé sur ladite armature (2).

## Patentansprüche

1. Wellendichtung mit Schmiermittelvorrat, welche Wellendichtung einen mit einem Bauelement (2), das dazu geeignet ist, eine Welle (1) zu umgeben, eng verbundenen ringförmigen Körper (3) aus Elastomer aufweist, der an einem flexiblen Kopf (3a) mit einer Dichtlippe (4) versehen ist, die dazu geeignet ist, in Kontakt mit einer Außenumfangsfläche der Welle (1) zu bleiben, und zwar mit einem bestimmten radialen Abstand von der Achse (X-X) des Körpers (3), wobei die Wellendichtung außerdem eine weiche ringförmige Wand (7) aufweist, die in Richtung der Welle (1) gerichtet ist und deren Kante (10), die sich in einem radialen Abstand von der Achse (X-X) befindet, der kleiner ist als der bestimmte radiale Abstand, dazu geeignet ist, in eine Ausnehmung (11) in der Welle (1) hervorzustehen, wobei diese Wand (7) so innen und im inneren Bereich der Wellendichtung einen Raum begrenzt, der dazu geeignet ist, von einem Schmiermittelvorrat (12) ausgefüllt zu werden, **dadurch gekennzeichnet, dass** die weiche Wand (7a) integraler Bestandteil des ringförmigen Körpers (3) ist und ungefähr in der Mitte des Zweiges des Körpers (3) der Wellendichtung beginnt, der rechtwinklig zur Achse (X-X) verläuft, und sich dann radial in Richtung der Achse (X-X) in Richtung der Ausnehmung (11) der Welle krümmt.

2. Wellendichtung nach Anspruch 1, **dadurch gekennzeichnet, dass** der Elastomerkörper aus einem Stück mit seiner weichen Wand (7a), seinem flexiblen Kopf (3a) und einem Fuß (3b) ausgeformt ist, während er mit dem Bauelement (2) eng verbunden ist.

## Claims

1. Shaft seal with lubricant reserve, this seal comprising, adhered to a frame (2) suitable to surround a shaft (1), an annular body (3) made of elastomer provided, on a flexible head (3a), with a seal lip (4) suitable to remain in contact with a peripheral surface of the said shaft (1), at a determined radial distance from the axis (X-X) of the said body (3), the said seal also including a flexible annular wall (7) directed towards the shaft (1) and the edge (10) of which, situated at a radial distance from the said axis (X-X) smaller than the said determined radial distance, is suitable to enter a groove (11) in the shaft (1), this wall (7) thus defining, inside and in the lower part of the said seal, a space suitable to be filled with a reserve (12) of lubricant, **characterised by** the fact that the said flexible wall (7a) forms an integral part of the said annular body (3) departing approximately from the middle of the arm of the body (3) of the seal which is perpendicular to the axis (X-X) and then being curved radially in the direction of the axis (X-X) towards the groove (11) in the shaft.

2. Seal as described in claim 1, **characterised by** the fact that the body made of elastomer is moulded in one piece with its flexible wall (7a), its flexible head (3a) and a foot (3b), while being adhered to the said frame (2).
